# EUROPEAN PATENT APPLICATION

(11) **EP 2 615 070 A1**
(43) Date of publication of application: **17.07.2013**
(21) Application number: 11823525.8
(22) Date of filing: 05.09.2011
(51) Int. Cl.: C03C 4/14, C03C 3/062, C03C 3/097, C03C 3/16, H01B 1/06, H01B 1/08, H01B 13/00, H01M 8/02, H01M 8/12

(54) **IONICALLY CONDUCTIVE MATERIAL AND PROCESS FOR PRODUCING SAME**

(30) Priority: 06.09.2010 JP 2010199015; 06.09.2010 JP 2010199014
(71) Applicant: Hyogo Prefectural Government, Hyogo 650-8567 (JP); Nippon Electric Glass Co., Ltd., Otsu-shi Shiga 520-8639 (JP)
(72) Inventor: YAZAWA Tetsuo, Himeji-shi Hyogo 671-2201 (JP); DAIKO Yusuke, Himeji-shi Hyogo 671-2201 (JP); YAMADA Takeshi, Himeji-shi Hyogo 671-2201 (JP); TAKASE Hironori, Otsu-shi Shiga 520-8639 (JP); YAMAZAKI Hiroki, Otsu-shi Shiga 520-8639 (JP)
(74) Representative: Tetzner, Michael
(86) International application number: PCT/JP2011/070165
(87) International publication number: WO 2012/033050

(57) **Abstract**

Provided is an ion-conducting material, comprising, as a composition in terms of mol%, 15 to 80% of P₂O₅, 0 to 70% of SiO₂, and 5 to 35% of R₂O, which represents the total content of Li₂O, Na₂O, K₂O, Rb₂O, Cs₂O, and Ag₂O.

## Description

### Technical Field

The present invention relates to an ion-conducting material (ion conductor) and a method of producing the same, in particular, an ion-conducting material exhibiting good proton-conducting property and a method of producing the same.

### Background Art

A fuel cell has a high theoretical value for power generation efficiency and its waste heat can be reused, and hence emission of carbon dioxide from the fuel cell can be significantly reduced in comparison to that from most-advanced thermal power generation equipment or the like, and the fuel cell can provide enough electricity and heat. Further, a polymer electrolyte fuel cell typified by a fuel cell using a perfluoroalkyl sulfonate-based polymer (the registered trademark "Nafion") or the like has been attracting attention as a fuel cell to be used in small-scale power generation for household use, on-vehicleuse, or the like. However, the polymer electrolyte fuel cell currently involves a problem of having low power generation efficiency (up to about 33%) because of having an operating temperature of as low as about 80°C.

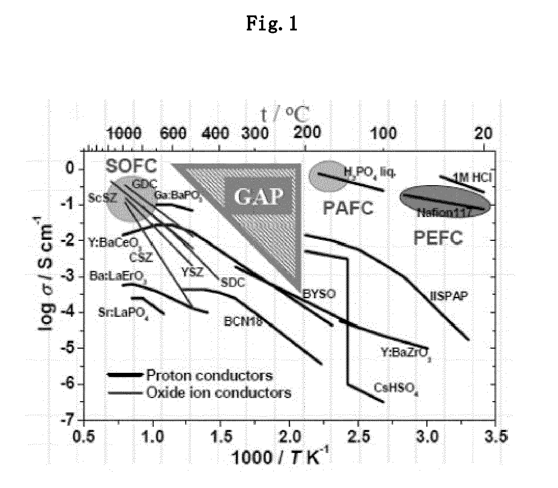

Further, a phosphoric acid fuel cell has been now in practical use, but involves problems in that its operating temperature is about 200°C and its production cost is high. In addition, a solid oxide fuel cell involves a problem in that inexpensive stainless steel or the like cannot be used as a constituent member for the fuel cell because of having an operating temperature of as extremely high as about 1000 °C. Such circumstances as described above require development of a fuel cell that can be operated well in a temperature range corresponding to a GAP part shown in FIG. 1, that is, a medium temperature range of 200 to 500°C. Note that it is said that even a fuel cell having an overall efficiency of more than 50% can be developed when the operating temperature of the fuel cell can be increased up to about 500°C.

### Citation List

Patent Literature 1: JP 2002-097272 A

Non Patent Literature 1: T. Norby, Solid State Ionics, 125, 1, 1990
Non Patent Literature 2: Yoshihiro Abe, NEW GLASS, Vol. 12, No. 3, 1997, p28

### Summary of Invention

### Technical Problem

In order to increase the operating temperature of a fuel cell up to about 500°C, it is essential to develop an electrolyte exhibiting high proton-conducting property or high oxygen ion-conducting property in the temperature range. However, the fact is that an ion-conducting material having a practical electric conductivity in the medium temperature range of 200 to 500°C has not yet been reported (see Non Patent Literature 1).

Under such a situation as described above, phosphate glass has been currently studied as a candidate for an ion-conducting material, in particular, a proton-conducting material, operating in a medium temperature range (see Patent Literature 1 and Non Patent Literature 2).

However, the phosphate glass described in Patent Literature 1 and Non Patent Literature 2 is manufactured by a sol-gel method, and hence humidification is necessary when using the same. In addition, the phosphate glass has low thermal resistance and moreover, has problems in formability (in particular, formability into a film shape) and chemical durability.

Thus, a technical object of the present invention is to create an ion-conducting material, in particular, a proton-conducting material, having good ion-conducting property in the medium temperature range of 200 to 500°C without being humidified and being excellent in formability and long-term stability.

### Solution to Problem

The inventors of the present invention have made intensive studies. As a result, the inventors have found that the above-mentioned technical object can be attained by restricting the content of each of P₂O₅, SiO₂, and alkali metal oxides to a predetermined range and using such the material as an ion-conducting material, and propose the finding as the present invention. That is, an ion-conducting material of the present invention comprises, as a composition in terms of mol%, 15 to 80% of P₂O_{5,} 0 to 70% of SiO₂, and 5 to 35% of R₂O, which represents the total content of Li₂O, Na₂O, K₂O, Rb₂O, Cs₂O, and Ag₂O.

The ion-conducting material of the present invention comprises 15 to 80% of P₂O₅, 0 to 70% of SiO₂, and 5 to 35% of R₂O. With this, the ion-conducting material exhibits good ion-conducting property in the medium temperature range of 200 to 500°C without being humidified and the long-term stability thereof improves. Further, with this, meltability of the ion-conducting material becomes better so that the ion-conducting material can be easily manufactured by a melting method, resulting in improvements of formability, homogeneity, and density thereof.

In the ion-conducting material of the present invention, it is preferred that R₂O comprise at least two or more kinds of components among Li₂O, Na₂O, K₂O, Rb₂O, Cs₂O, and Ag₂O. With this, the mixed alkali effect suppresses the ion conduction of alkali ions, increasing the ratio of proton conduction, and consequently, the ion-conducting material can be easily applied to an electrolyte of a fuel cell. Here, it is preferred that the content of each of the two or more kinds of components of R₂O included in the ion-conducting material of the present invention be 0.1 mol% or more.

In the ion-conducting material of the present invention, it is preferred that the content of P₂O₅ be 15 to 60% and the content of SiO₂ be 10 to 70%.

The ion-conducting material of the present invention is preferable to have a molar ratio of (Na₂O+K₂O) /R₂O of 0.2 to 1.0. With this, the proton-conducting property can be easily enhanced. Note that "Na₂O+K₂O" refers to the total content of Na₂O and K₂O.

The ion-conducting material of the present invention is preferable to have a molar ratio of Na₂O/R₂O of 0.2 to 0.8. With this, the proton-conducting property can be easily enhanced.

The ion-conducting material of the present invention is preferable to have a molar ratio of K₂O/R₂O of 0.2 to 0.8. With this, the proton-conducting property can be easily enhanced.

It is preferred that the ion-conducting material of the present invention further comprise 0.1 mol% or more of Al₂O₃ in the composition. With this, the long-term stability can be easily enhanced because deliquescent property is lowered.

It is preferred that the ion-conducting material of the present invention have an ionic conductivity log₁₀σ (S/cm) at 500°C of -5.5 or more and have a transport number of a proton at 500°C of 0.7 or more. Here, the "ionic conductivity at 500°C" can be measured by, for example, forming Ag electrodes on the surfaces of a sample (having dimensions of 1.5 cm by 1.0 cm by 1.0 mm in thickness and being optically polished) with using Ag paste and then using an alternating current impedance method. Further, the "transport number of a proton at 500°C" can be determined by, for example, sputtering Pt on the surfaces of a sample (having dimensions of 1.5 cm by 1.0 cm by 1. 0 mm in thickness and being optically polished), thereby forming Pt electrodes, regulating the ambient atmosphere at the side of the one surface of the sample as a reference side to an atmosphere containing 1 volume% hydrogen, changing the hydrogen partial pressure of the ambient atmosphere at the side of the other surface of the sample, and then measuring the electromotive force, followed by calculating the gradient on the basis of the Nernst equation.

It is preferred that the ion-conducting material of the present invention have an areal resistance value (Ω·cm²) at 500°C of 30 or less. Here, the "areal resistance value at 500°C" can be measured by, for example, an alternating current impedance method. It is possible to use, for the measurement, a sample prepared by, for example, forming Ag electrodes by Ag paste on the surfaces of a sample (having dimensions of 1.5 cm by 1.0 cm and being optically polished).

It is preferred that the ion-conducting material of the present invention be an amorphous material with a crystallinity of 50% or less. Here, the "crystallinity" is determined by, for example, measuring the scattering intensity area and the crystal peak area in the range of 10 to 60° of the diffraction angle 2θ with using an X-ray diffractometer (manufactured by Rigaku Corporation), and calculating the scattering intensity area and the crystal peak area thus determined with using a multiple-peak separation method, thereby obtaining the ratio (%) of the crystal peak area to the scattering intensity area.

It is preferred that the ion-conducting material of the present invention have a thin-sheet shape (including a thin-film shape) and have a thickness of 1 to 500 µm. With this, the ion-conducting material has a smaller areal resistance value in the medium temperature range of 200 to 500°C, and hence has a higher ionic conductivity in the medium temperature range of 200 to 500°C, resulting in the improvement of the performance of an electrochemical device. In particular, with this, when the ion-conducting material is applied to a fuel cell, the resistance of the electrolyte becomes smaller, reducing the resistance loss thereof, resulting in the improvement of the power generation efficiency of the fuel cell. Note that, when an ion-conducting material having a thin-sheet shape and having good homogeneity and good density is used for a direct methanol fuel cell, the crossover thereof can be easily suppressed.

It is preferred that the ion-conducting material of the present invention be used for an electrochemical device.

It is preferred that the ion-conducting material of the present invention be used for a fuel cell.

A method of producing an ion-conducting material according to the present invention is a method of producing the above-mentioned ion-conducting material, the method comprising the steps of melting a raw material, and forming the resultant molten glass into a predetermined shape. With this, the formability can be enhanced. It is preferred that an overflow down-draw method, a slot down-draw method, or a redraw method be adopted as a method for the forming. Those forming methods have the advantage of easily forming the molten glass into a predetermined shape, in particular, into a thin-sheet shape.

### Brief Description of Drawing

FIG. 1 is an explanatory diagram illustrating a relationship between an operating temperature and an ionic conductivity in various fuel cells.

### Description of Embodiments

The reasons why the composition has been limited as described above in the ion-conducting material of the present invention are explained below. Note that the expression "%" denotes "mol%" in the description in regard to the composition.

P₂O₅ is a component that enhances the ionic conductivity. The content of P₂O₅ is 15 to 80%, preferably 20 to 70%, more preferably 25 to 65%, still more preferably 25 to 60%, particularly preferably 25 to 50%, most preferably 25 to 45%. When the content of P₂O₅ is too small, the ionic conductivity of the ion-conducting material is liable to deteriorate. On the other hand, when the content of P₂O₅ is too large, the ion-conductingmaterial is liable to deliquesce, and hence the long-term stability thereof is liable to deteriorate.

SiO₂ is a network former and a component that enhances the chemical durability. The content of SiO₂ is 0 to 70%, preferably 0.1 to 60%, more preferably 1 to 50%, still more preferably 5 to 49%, particularly preferably 10 to 40%. When the content of SiO₂ is too small, the chemical durability of the ion-conducting material is liable to deteriorate. On the other hand, when the content of SiO₂ is too large, the ionic conductivity of the ion-conducting material is liable to deteriorate. And also the ion-conducting material is liable to devitrifyduringmelting or forming, and further the viscosity there of inappropriately rises, resulting in difficulty in melting and forming. In addition, a temperature range in which the viscosity drastically changes is liable to occur, and hence formability is liable to deteriorate.

Li₂O, Na₂O, K₂O, Rb₂O, Cs₂O, and Ag₂O, which are R₂O components, are components that enhance the ionic conductivity of the ion-conducting material and also lower the viscosity of the ion-conducting material to enhance meltability thereof. The content of R₂O (the total content of Li₂O, Na₂O_{,} K₂O, Rb₂O, Cs₂O, and Ag₂O) is 5 to 35%, preferably 8 to 30%, more preferably 10 to 25%. When the content of R₂O is too small, the ionic conductivity of the ion-conducting material is liable to deteriorate, and the viscosity thereof inappropriately rises, resulting in difficulty in melting and forming. On the other hand, when the content of R₂O is too large, the chemical durability of the ion-conducting material is liable to deteriorate. In addition, a temperature range in which the viscosity drastically changes is liable to occur, and hence formability is liable to deteriorate.

In the ion-conducting material of the present invention, R₂O comprises preferably two or more kinds of components among Li₂O, Na₂O, K₂O, Rb₂O, Cs₂O, and Ag₂O and comprises particularly preferably three or more kinds thereof. When the ion-conducting material comprises only one kind of R₂O component, no mixed alkali effect is provided, and hence the ion conduction of alkali ions is sometimes difficult to suppress, with the result that the ratio of proton conduction (the transport number of a proton) is liable to decrease.

Li₂O is a component that enhances the ionic conductivity of the ion-conducting material and also lowers the viscosity of the ion-conducting material to enhance meltability thereof. The content of Li₂O is preferably 0 to 20%, 0 to 15%, particularly preferably 0 to 10%. When the content of Li₂O is too large, the chemical durability of the ion-conducting material is liable to deteriorate.

Na₂O is a component that enhances the ionic conductivity of the ion-conducting material and also lowers the viscosity of the ion-conducting material to enhance meltability thereof. The content of Na₂O is preferably 0 to 25%, 1 to 20%, particularly preferably 3 to 15%. When the content of Na₂O is too large, the chemical durability of the ion-conducting material is liable to deteriorate. Note that, when the content of Na₂O is too small, the ionic conductivity of the ion-conducting material is liable to deteriorate, and the viscosity of the ion-conducting material inappropriately rises, resulting in difficulty in melting and forming thereof. In addition, a temperature range in which the viscosity drastically changes is liable to occur, and hence formability is liable to deteriorate.

K₂O is a component that enhances the ionic conductivity of the ion-conducting material and also lowers the viscosity of the ion-conducting material to enhance meltability thereof. The content of K₂O is preferably 0 to 25%, 1 to 20%, particularlypreferably 3 to 15%. When the content of K₂O is too large, the chemical durability of the ion-conducting material is liable to deteriorate. Note that, when the content of K₂O is too small, the ionic conductivity of the ion-conducting material is liable to deteriorate, and the viscosity of the ion-conducting material inappropriately rises, resulting in difficulty in melting and forming thereof. In addition, a temperature range in which the viscosity drastically changes is liable to occur, and hence formability is liable to deteriorate.

Ag₂O is a component that enhances the ionic conductivity of the ion-conducting material and also lowers the viscosity of the ion-conducting material to enhance meltability thereof. The content of Ag₂O is preferably 0 to 20%, 0 to 15%, 0 to 10%, and it is particularly preferred that the composition be substantially free of Ag₂O, that is, the content be 0.1% or less. When the content of Ag₂O is too large, the material cost is liable to increase sharply.

The molar ratio of (Na₂O+K₂O) /R₂O is preferably 0.2 to 1.0, 0.25 to 1.0, particularly preferably 0.3 to 1.0. With this, the proton-conducting property can be easily enhanced, and even though inexpensive materials are used, the mixed alkali effect of the materials can be provided. Note that "Na₂O+K₂O" refers to the total content of Na₂O and K₂O.

The molar ratio of Na₂O/R₂O is preferably 0.2 to 0.8, 0.25 to 0.7, particularly preferably 0.3 to 0.65. When the molar ratio of Na₂O/R₂O is out of the above ranges, the mixed alkali effect is hardly provided, and hence the ion conduction of alkali ions is difficult to suppress, with the result that the ratio of proton conduction is liable to decrease. Further, the molar ratio of K₂O/R₂O is preferably 0.2 to 0.8, 0.25 to 0.7, particularly preferably 0.3 to 0. 65. When the molar ratio of K₂O/R₂O is out of the above ranges, the mixed alkali effect is hardly provided, and hence the ion conduction of alkali ions is difficult to suppress, with the result that the ratio of proton conduction is liable to decrease. Note that the molar ratio of Li₂O/R₂O is preferably 0.8 or less, 0.6 or less, particularlypreferably 0.5 or less because of the same reasons.

Al₂O₃ is a component that suppresses deliquescent property of the ion-conducting material and enhances the long-term stability thereof. The content of Al₂O₃ is preferably 0 to 20%, 0.1 to 16%, 1 to 12%, particularly preferably 2 to 10%. When the content of Al₂O₃ is too large, the ionic conductivity of the ion-conducting material is liable to deteriorate, and the ion-conducting material is liable to devitrify during melting or forming. Further, the viscosity of the ion-conducting material inappropriately rises, resulting in difficulty in melting and forming thereof. In addition, a temperature range in which the viscosity drastically changes is liable to occur, and hence formability is liable to deteriorate.

In addition to the above-mentioned components, MgO, CaO, SrO, BaO, ZrO₂, TiO₂, La₂O₃, ZnO, Sb₂O₃, Fe₂O₃, SnO₂, CeO₂, SO₃, Cl, As₂O₃, CuO, Gd₂O₃, Y₂O₃, Ta₂O₃, Nb₂O₅, Nd₂O₃, Tb₂O₃, WO₃, V₂O₅, MoO₃, Bi₂O₃, CoO, Cr₂O₃, MnO₂, NiO, B₂O₃, and the like may be added for the purposes of adjusting the viscosity, improving the chemical durability, and improving the fining effect. The content of each of these components is preferably 0 to 5% . It should be noted that the content of MgO+CaO+SrO+BaO (total content of MgO, CaO, SrO, and BaO), which cause a reduction in ion conductivity, is preferably 2% or less, and it is desirable that the composition be substantially free of these components, i.e., the content of MgO+CaO+SrO+BaO be 0.1% or less. Further, the content of each of As₂O₃, CuO, Gd₂O₃, Y₂O₃, Ta₂O₃, Nb₂O₅, Nd₂O₃, Tb₂O₃, WO₃, V₂O₅, MoO₃, Bi₂O₃, CoO, Cr₂O₃, MnO₂, and NiO, which cause a rise in raw material cost, is preferably 1% or less, and it is desirable that the composition be substantially free of these components, i.e., the content of each of these components be 0.1% or less. The content of B₂O₃, which also causes a rise in raw material cost, is preferably 2% or less, and it is desirable that the composition be substantially free of B₂O₃, i.e., the content be 0.1% or less.

The ion-conducting material of the present invention has an ionic conductivity log₁₀σ (S/cm) at 500°C of preferably -5.5 or more, -5. or more, particularly preferably -4.8 or more. With this, the ion-conducting material can be suitably used for a fuel cell that is operated in the medium temperature range of 200 to 500°C.

The ion-conducting material of the present invention has a transport number of a proton at 500°C of preferably 0.7 or more, 0.8 or more, particularly preferably 0.9 or more. With this, the ratio of proton conduction is increased, and hence the ion-conducting material is easily applied to a fuel cell.

The ion-conducting material of the present invention has an areal resistance value (Ω·cm²) at 500°C of preferably 30 or less, 15 or less, particularly preferably 10 or less. With this, the ion-conducting material has a higher ionic conductivity in the medium temperature range of 200 to 500°C, resulting in the improvement of the performance of an electrochemical device. In particular, with this, when the ion-conducting material is applied to a fuel cell, the resistance of the electrolyte becomes smaller, reducing the resistance loss thereof, resulting in the improvement of the power generation efficiency of the fuel cell.

When the ion-conducting material of the present invention has a thin-sheet shape (including a thin-film shape), the ion-conducting material has a thickness of preferably 1 to 500 µm, 2 to 200 µm, 3 to 100 µm, particularly preferably 5 to 50 µm. When the thickness of the ion-conducting material is smaller than 1 µm, the handling ability thereof deteriorates so that the production efficiency of an electrochemical device decreases. On the other hand, when the thickness of the ion-conducting material is larger than 500 µm, the areal resistance value thereof rises, with the result that the performance of an electrochemical device deteriorates, and particularly the power generation efficiency of a fuel cell deteriorates.

The ion-conducting material of the present invention is preferably an amorphous material with a crystallinity of 50% or less. With this, the homogeneity and density thereof can be easily enhanced. Further, the ion-conducting material of the present invention has preferably phase separation, more preferably spinodal phase separation, in consideration of enhancing the ion-conducting property thereof. With this, a highly polar phase provided by the phase separation can be easily used as an ion conductive path, and hence the concentration of a conductive carrier can be locally enhanced, easily resulting in enhancing the ion-conducting property.

A method of producing an ion-conducting material according to the present invention is described. First, raw materials are blended so that the above-mentioned composition ranges are achieved. Next, the blended raw materials are loaded into a continuous melting furnace, followed by melting under heating. Subsequently, the resultant molten glass is fed into a forming apparatus to form into a configuration having a flat-sheet shape or a thin-sheet shape, followed by annealing. Thus, an ion-conducting material can be manufactured. Note that, when the ion-conducting material of the present invention is manufactured, the aspect of manufacturing by a sol-gel method is not completely eliminated, but such kind of aspect is disadvantageous from various points of view as described above.

In the method of producing an ion-conducting material according to the present invention, a melting temperature is preferably800°Cormore, 1000°Cormore, 1200°Cormore, particularly preferably 1400°C or more. With this, a melting time can be easily shortened and the resultant ion-conducting material can be easily homogeneous.

It is possible to obtain selectively, by changing the rate of annealing, any of glass in which phase separation does not occur, glass in which phase separation occurs, and crystallized glass in which crystals and glass are mixed. Note that phase separation and crystallization can also be performed by reheating after annealing. Further, when actual production of the ion-conducting material of the present invention is taken into consideration, glass in which phase separation does not substantially occur is preferred, and the production preferably does not include the step of performing phase separation by heat treatment.

As a method of forming the molten glass, there may be adopted each of forming methods such as a roll-out method, an overflow down-draw method, a slot down-draw method, a float method, and a redraw method. In particular, an overflow down-draw method, a slot down-draw method, and a redraw method are preferred because the molten glass can be easily formed into a thin sheet shape and surface accuracy is excellent.

### Example 1

Hereinafter, the present invention is described in detail based on examples . Note that the following examples are merely for illustrative purposes. The present invention is by no means limited to the following examples.

Tables 1 to 4 show examples of the present invention (Sample Nos. 1 to 34).

**[Table 1]**

| | | Example | | | | | | | | | |
|---|---|---|---|---|---|---|---|---|---|---|---|
| | | No. 1 | No. 2 | No. 3 | No. 4 | No. 5 | No. 6 | No. 7 | No. 8 | No. 9 | No. 10 |
| Composition (mol%) | P₂O₅ | 29.0 | 29.1 | 28.9 | 33.3 | 30.0 | 39.0 | 30.0 | 30.0 | 30.0 | 45.0 |
| | SiO₂ | 50.0 | 50.0 | 49.6 | 47.7 | 50.0 | 41.0 | 56.0 | 45.0 | 62.0 | 47.0 |
| | Li₂O | - | - | 4.8 | - | - | - | - | - | - | - |
| | Na₂O | 7.0 | 5.6 | 4.7 | 7.1 | 7.0 | 7.0 | 4.0 | 7.0 | 1.0 | 1.0 |
| | K₂O | 6.0 | 7.3 | 4.0 | 7.1 | 7.0 | 7.0 | 4.0 | 7.0 | 1.0 | 1.0 |
| | Al₂O₃ | 8.0 | 8.0 | 8.0 | 4.8 | 6.0 | 6.0 | 6.0 | 11.0 | 6.0 | 6.0 |
| | B₂O₃ | - | - | - | - | - | - | - | - | - | - |
| R₂O | | 13.0 | 12.9 | 13.5 | 14.3 | 14.0 | 14.0 | 8.0 | 14.0 | 2.0 | 2.0 |
| (Na₂O+K₂O) /R₂O | | 1.0 | 1.0 | 0.64 | 1.0 | 1.0 | 1.0 | 1.0 | 1.0 | 1.0 | 1.0 |
| Li₂O/R₂O | | 0 | 0 | 0.36 | 0 | 0 | 0 | 0 | 0 | 0 | 0 |
| Na₂O/R₂O | | 0.54 | 0.43 | 0.35 | 0.5 | 0.5 | 0.5 | 0.5 | 0.5 | 0.5 | 0.5 |
| K₂O/R₂O | | 0.46 | 0.57 | 0.3 | 0.5 | 0.5 | 0.5 | 0.5 | 0.5 | 0.5 | 0.5 |
| log₁₀σ (S/cm) | 300°C | -6.7 | -7.1 | -7.3 | Unmeasure d | Unmeasure d | Unmeasure d | Unmeasure d | Unmeasure d | Unmeasure d | Unmeasure d |
| | 400°C | -5.4 | -5.7 | -5.6 | Unmeasure d | Unmeasure d | Unmeasure d | Unmeasure d | Unmeasure d | Unmeasure d | Unmeasure d |
| | 500°C | -4.7 | -4.4 | -3.8 | Unmeasure d | Unmeasure d | Unmeasure d | Unmeasure d | Unmeasure d | Unmeasure d | Unmeasure d |
| Transport number of proton [500°C] | | 1.0 | 0.9 | 0.9 | Unmeasure d | Unmeasure d | Unmeasure d | 1.0 | Unmeasure d | Unmeasure d | Unmeasure d |
| Deliquescent property (%) | | 0.07 | 0.06 | 0.10 | Unmeasure d | Unmeasure d | Unmeasure d | Unmeasure d | Unmeasure d | Unmeasure d | Unmeasure d |
| Water resistance (g/cm³) | | Unmeasure d | Unmeasure d | Unmeasure d | 18.6 | 0.5 | 5.8 | 4.4 | 0.0 | 0.5 | 1.2 |
| Vitrification | | ○ | ○ | ○ | ○ | ○ | ○ | ○ | ○ | ○ | ○ |
| Formability | | Unmeasure d | Unmeasure d | Unmeasure d | ΔΔ | ΔΔ | Δ | ΔΔ | ΔΔ | Δ | ○ |
| Thickness (µm) | | 20 | 22 | 29 | 48 | 46 | 39 | 42 | 49 | 38 | 34 |
| Areal resistance (Ω·cm²) | 300°C | 4080 | 6700 | 12250 | Unmeasure d | Unmeasure d | Unmeasure d | Unmeasure d | Unmeasure d | Unmeasure d | Unmeasure d |
| | 400°C | 520 | 254 | 238 | Unmeasure d | Unmeasure d | Unmeasure d | Unmeasure d | Unmeasure d | Unmeasure d | Unmeasure d |
| | 500°C | 9 | 14 | 5 | Unmeasure d | Unmeasure d | Unmeasure d | Unmeasure d | Unmeasure d | Unmeasure d | Unmeasure d |

**[Table 2]**

| | | Example | | | | | | | | | |
|---|---|---|---|---|---|---|---|---|---|---|---|
| | | No. 11 | No. 12 | No. 13 | No. 14 | No. 15 | No. 16 | No. 17 | No. 18 | No. 19 | No. 20 |
| Composition (mol%) | P₂O₅ | 45.0 | 45.0 | 45.0 | 40.0 | 50.0 | 55.0 | 50.0 | 50.0 | 50.0 | 55.0 |
| | SiO₂ | 35.0 | 29.0 | 23.0 | 28.0 | 24.0 | 19.0 | 18.0 | 30.0 | 12.0 | 25.0 |
| | Li₂O | - | - | - | - | - | - | - | - | - | - |
| | Na₂O | 7.0 | 10.0 | 13.0 | 13.0 | 10.0 | 10.0 | 13.0 | 7.0 | 16.0 | 7.0 |
| | K₂O | 7.0 | 10.0 | 13.0 | 13.0 | 10.0 | 10.0 | 13.0 | 7.0 | 16.0 | 7.0 |
| | Al₂O₃ | 6.0 | 6.0 | 6.0 | 6.0 | 6.0 | 6.0 | 6.0 | 6.0 | 6.0 | 6.0 |
| | B₂O₃ | - | - | - | - | - | - | - | - | - | - |
| R₂O | | 14.0 | 20.0 | 26.0 | 26.0 | 20.0 | 20.0 | 26.0 | 14.0 | 32.0 | 14.0 |
| (Na₂O+K₂O) /R₂O | | 1.0 | 1.0 | 1.0 | 1.0 | 1.0 | 1.0 | 1.0 | 1.0 | 1.0 | 1.0 |
| Li₂O/R₂O | | 0 | 0 | 0 | 0 | 0 | 0 | 0 | 0 | 0 | 0 |
| Na₂O/R₂O | | 0.5 | 0.5 | 0.5 | 0.5 | 0.5 | 0.5 | 0.5 | 0.5 | 0.5 | 0.5 |
| K₂O/R₂O | | 0.5 | 0.5 | 0.5 | 0.5 | 0.5 | 0.5 | 0.5 | 0.5 | 0.5 | 0.5 |
| log₁₀σ (S/cm) | 300°C | Unmeasure d | Unmeasure d | Unmeasure d | Unmeasure d | -6.5 | Unmeasure d | Unmeasure d | Unmeasure d | Unmeasure d | Unmeasure d |
| | 400°C | Unmeasure d | Unmeasure d | Unmeasure d | Unmeasure d | -4.8 | Unmeasure d | Unmeasure d | Unmeasure d | Unmeasure d | Unmeasure d |
| | 500°C | Unmeasure d | Unmeasure d | Unmeasure d | Unmeasure d | -3.1 | Unmeasure d | Unmeasure d | Unmeasure d | Unmeasure d | Unmeasure d |
| Transport number of proton [500°C] | | Unmeasure d | Unmeasure d | Unmeasure d | Unmeasure d | 1.0 | Unmeasure d | Unmeasure d | Unmeasure d | Unmeasure d | Unmeasure d |
| Deliquescent property (%) | | Unmeasure d | Unmeasure d | Unmeasure d | Unmeasure d | Unmeasure d | Unmeasure d | Unmeasure d | Unmeasure d | Unmeasure d | Unmeasure d |
| Water resistance (g/cm³) | | 10.0 | 22.3 | 39.4 | 11.3 | 9.8 | 1.7 | 28.2 | 5.5 | 55.5 | 1.4 |
| Vitrification | | ○ | ○ | ○ | ○ | ○ | ○ | ○ | ○ | ○ | ○ |
| Formability | | ○ | ○ | ○ | ΔΔ | ⓪ | ⓪ | ⓪ | ○ | ⓪ | ○ |
| Thickness (µm) | | 32 | 28 | 29 | 47 | 23 | 26 | 23 | 27 | 23 | 28 |
| Areal resistance (Ω.cm²) | 300°C | Unmeasure d | Unmeasure d | Unmeasure d | Unmeasure d | Unmeasure d | Unmeasure d | Unmeasure d | Unmeasure d | Unmeasure d | Unmeasure d |
| | 400°C | Unmeasure d | Unmeasure d | Unmeasure d | Unmeasure d | Unmeasure d | Unmeasure d | Unmeasure d | Unmeasure d | Unmeasure d | Unmeasure d |
| | 500°C | Unmeasure d | Unmeasure d | Unmeasure d | Unmeasure d | Unmeasure d | Unmeasure d | Unmeasure d | Unmeasure d | Unmeasure d | Unmeasure d |

**[Table 3]**

| | | Example | | | | | | | | | |
|---|---|---|---|---|---|---|---|---|---|---|---|
| | | No. 21 | No. 22 | No. 23 | No. 24 | No. 25 | No. 26 | No. 27 | No. 28 | No. 29 | No. 30 |
| Composition (mol%) | P₂O₅ | 50.0 | 50.0 | 55.0 | 55.0 | 50.0 | 45.0 | 45.0 | 50.0 | 55.0 | 60.0 |
| | SiO₂ | 20.0 | 16.0 | 11.0 | 17.0 | 22.0 | 21.0 | 15.0 | 10.0 | 5.0 | 6.0 |
| | Li₂O | - | - | - | - | - | - | - | - | - | - |
| | Na₂O | 10.0 | 10.0 | 10.0 | 7.0 | 7.0 | 10.0 | 13.0 | 13.0 | 13.0 | 10.0 |
| | K₂O | 10.0 | 10.0 | 10.0 | 7.0 | 7.0 | 10.0 | 13.0 | 13.0 | 13.0 | 10.0 |
| | Al₂O₃ | 10.0 | 14.0 | 14.0 | 14.0 | 14.0 | 14.0 | 14.0 | 14.0 | 14.0 | 14.0 |
| | B₂O₃ | - | - | - | - | - | - | - | - | - | - |
| R₂O | | 20.0 | 20.0 | 20.0 | 14.0 | 14.0 | 20.0 | 26.0 | 26.0 | 26.0 | 20.0 |
| (Na₂O+K₂O) /R₂O | | 1.0 | 1.0 | 1.0 | 1.0 | 1.0 | 1.0 | 1.0 | 1.0 | 1.0 | 1.0 |
| Li₂O/R₂O | | 0 | 0 | 0 | 0 | 0 | 0 | 0 | 0 | 0 | 0 |
| Na₂O/R₂O | | 0.5 | 0.5 | 0.5 | 0.5 | 0.5 | 0.5 | 0.5 | 0.5 | 0.5 | 0.5 |
| K₂O/R₂O | | 0.5 | 0.5 | 0.5 | 0.5 | 0.5 | 0.5 | 0.5 | 0.5 | 0.5 | 0.5 |
| log₁₀σ (S/cm) | 300°C | Unmeasure d | Unmeasure d | -6.9 | Unmeasure d | Unmeasure d | Unmeasure d | Unmeasure d | Unmeasure d | Unmeasure d | Unmeasure d |
| | 400°C | Unmeasure d | Unmeasure d | -5.4 | Unmeasure d | Unmeasure d | Unmeasure d | Unmeasure d | Unmeasure d | Unmeasure d | Unmeasure d |
| | 500°C | Unmeasure d | Unmeasure d | -3.9 | Unmeasure d | Unmeasure d | Unmeasure d | Unmeasure d | Unmeasure d | Unmeasure d | Unmeasure d |
| Transport number of proton [500°C] | | Unmeasure d | Unmeasure d | Unmeasure d | Unmeasure d | Unmeasure d | Unmeasure d | Unmeasure d | Unmeasure d | Unmeasure d | Unmeasure d |
| Deliquescent property (%) | | Unmeasure d | Unmeasure d | Unmeasure d | Unmeasure d | Unmeasure d | Unmeasure d | Unmeasure d | Unmeasure d | Unmeasure d | Unmeasure d |
| Water resistance (g/cm³) | | 1.0 | 0.2 | 0.2 | 0.2 | 0.3 | 0.1 | 0.1 | 0.2 | 0.1 | 0.1 |
| Vitrification | | ○ | ○ | ○ | ○ | ○ | ○ | ○ | ○ | ○ | ○ |
| Formability | | ○ | ⓪ | ⓪ | ⓪ | ○ | ○ | Δ | ○ | ○ | ⓪ |
| Thickness (µm) | | 26 | 24 | 21 | 24 | 29 | 31 | 43 | 32 | 30 | 25 |
| Areal resistance (Ω·cm²) | 300°C | Unmeasure d | Unmeasure d | Unmeasure d | Unmeasure d | Unmeasure d | Unmeasure d | Unmeasure d | Unmeasure d | Unmeasure d | Unmeasure d |
| | 400°C | Unmeasure d | Unmeasure d | Unmeasure d | Unmeasure d | Unmeasure d | Unmeasure d | Unmeasure d | Unmeasure d | Unmeasure d | Unmeasure d |
| | 500°C | Unmeasure d | Unmeasure d | Unmeasure d | Unmeasure d | Unmeasure d | Unmeasure d | Unmeasure d | Unmeasure d | Unmeasure d | Unmeasure d |

**[Table 4]**

| | | Example | | | |
|---|---|---|---|---|---|
| | | No. 31 | No. 32 | No. 33 | No. 34 |
| Composition (mol%) | P₂O₅ | 60.0 | 28.7 | 31.2 | 50.0 |
| | SiO₂ | 12.0 | 49.4 | 53.7 | 12.0 |
| | Li₂O | - | - | - | - |
| | Na₂O | 7.0 | 14.0 | 15.1 | 10.0 |
| | K₂O | 7.0 | - | - | 10.0 |
| | Al₂O₃ | 14.0 | 7.9 | - | 18.0 |
| | B₂O₃ | - | - | - | - |
| R₂O | | 14.0 | 14.0 | 15.1 | 20.0 |
| (Na₂O+K₂O) /R₂O | | 1.0 | 1.0 | 1.0 | 1.0 |
| Li₂O/R₂O | | 0 | 0 | 0 | 0 |
| Na₂O/R₂O | | 0.5 | 1.0 | 1.0 | 0.5 |
| K₂O/R₂O | | 0.5 | 0 | 0 | 0.5 |
| log₁₀σ (S/cm) | 300°C | -7.6 | -4.9 | -4.6 | -7.2 |
| | 400°C | -6.0 | -3.9 | -3.7 | -5.7 |
| | 500°C | -4.8 | -2.8 | -2.7 | -4.2 |
| Transport number of proton [500°C] | | Unmeasured | 0.6 | Unmeasured | Unmeasured |
| Deliquescent property (%) | | Unmeasured | 0.05 | 3.21 | Unmeasured |
| Water resistance (g/cm³) | | 0.1 | 27 | 22 | 0.1 |
| Vitrification | | ○ | Unevaluated | Unevaluated | ○ |
| Formability | | ⓪ | Unevaluated | Unevaluated | ΔΔ |
| Thickness (µm) | | 24 | 27 | 22 | 49 |
| Areal resistance (Ω·m²) | 300°C | Unmeasured | 47 | 17 | Unmeasured |
| | 400°C | Unmeasured | 4 | 3 | Unmeasured |
| | 500°C | Unmeasured | 0.4 | 0.3 | Unmeasured |

Each sample listed in the tables was manufactured as follows. First, raw materials were blended so that each of the compositions listed in the tables was achieved. After that, the blended materials were loaded into an alumina crucible, followed by melting at 1400 to 1600°C for 2 hours. Next, the resultant molten glass was poured on a carbon sheet to be formed into a sheet, followed by annealing in an electric furnace in which the temperature was kept at 600°C. Subsequently, the glass sheet was processed into a flat-sheet shape with dimensions of 1.5 cm by 1 cm by 1.5 mm in thickness, followed by polishing the surfaces thereof by using abrasive papers of #100, #400, and #2000 in the stated order, yielding each sample. Each sample was evaluated for its ionic conductivity, transport number of a proton, deliquescent property, water resistance, vitrification, and formability. Note that each sample was confirmed to be an amorphous substance (glass) with a crystallinity of 50% or less by using an X-ray diffractometer. Further, molten glass was prepared by using a Pt crucible in the same manner as described above, and a blow pipe was used to form the molten glass into a balloon shape, followed by cutting with a glass cutter into a piece having a size of 1.5 cm by 1 cm, yielding each measurement sample. With respect to each measurement sample, the areal resistance value was measured. The results are shown in the tables.

The ionic conductivity log₁₀σ (S/cm) was a value obtained by forming Ag electrodes on the surfaces of the sample with using Ag paste, followed by measurement at each temperature in the tables by an alternating current impedance method.

The transport number of a proton at 500°C was evaluated as follows. First, Pt was sputtered on the surfaces of the sample, thereby forming Pt electrodes. Next, the ambient atmosphere at the side of the one surface of the sample as a reference side was regulated to the atmosphere containing 1 volume% hydrogen, the hydrogen partial pressure of the ambient atmosphere at the side of the other surface of the sample was changed, and then the electromotive force was measured. Subsequently, the gradient on the basis of the Nernst equation was calculated to determine the transport number of a proton.

The sample was immersed in pure water and was left to stand still at room temperature for 24 hours, followed by cleaning and drying. After that, the change of the mass of the sample was measured to use as an index of the deliquescent property thereof. The ratio (%) of the reduced mass of each sample after being dried to the mass of each sample before being immersed is shown in the tables.

The sample was immersed in pure water in a hermetically sealed container and was left to stand still at 60°C for 24 hours, followed by cleaning and drying. After that, the change of the mass of the sample was measured to use as an index of the water resistance thereof. The value (mg/cm²) obtained by dividing the reduced amount of the mass of each sample after being dried on the basis of the mass of each sample before being immersed by the surface area of each sample is shown in the tables.

Molten glass prepared by using a Pt crucible in the same manner as described above was poured to confirm the presence or absence of vitrification. The evaluation of the poured glass in which vitrification was found was represented by Symbol "○", and the evaluation of the poured glass in which vitrification was not found was represented by Symbol "×".

Molten glass prepared by using a Pt crucible in the same manner as described above was formed into a plate, and the glass plate was processed into a sample having dimensions of 1 cm by 1 cm by 5 mm. Next, the sample was remelted with a burner and the resultant molten glass was manually drawn to manufacture a fiber-like sample. When very strict temperature control was necessary for manufacturing the fiber-like sample from the sample, the evaluation of the sample was represented by Symbol "ΔΔ". When strict temperature control was necessary for manufacturing the fiber-like sample from the sample, the evaluation of the sample was represented by Symbol "Δ". When strict temperature control was not necessary for manufacturing the fiber-like sample from the sample, but the fibers had various diameters, the evaluation of the sample was represented by Symbol "○". When strict temperature control was not necessary for manufacturing the fiber-like sample from the sample, and the fibers had a uniform diameter, the evaluation of the sample was represented by Symbol "⓪".

The areal resistance value (Ω·cm²) is a value obtained by forming Ag electrodes on the surfaces of the sample with using Ag paste, measuring the resistance value at each temperature shown in the tables by using an alternating current impedance method, and then calculating based on the resultant resistance value and the area of the electrode.

As evident from Tables 1 to 4, each of Sample Nos. 1 to 3 and 15 shows a very high transport number of a proton, shows a high ionic conductivity as a proton-conducting material (proton conductor), and has a good evaluation on the deliquescent property. Further, each of Sample Nos. 4 to 14 and 16 to 34 is predicted to show a high transport number of a proton, show a high ionic conductivity as a proton-conducting material (proton conductor), and have a good evaluation on the deliquescent property.

Sample Nos. 1 to 31 and 34 were vitrified, and Sample Nos. 4 to 31 and 34 showed good formability.

Further, Sample No.1, No. 7, and No. 15 in the tables were used to perform a power generation test under the conditions of sputtered Pt as electrodes, pure hydrogen on the anode side, pure oxygen on the cathode side, and a measurement temperature of 500°C, yielding a voltage of 1.1 V and output values of 0.2, 0.03, and 0.3 mW/cm², respectively. Thus, Sample No. 1, No. 7, and No. 15 will be applicable as an electrolyte of a fuel cell. Further, other samples are estimated to be also applicable as an electrolyte of a fuel cell.

### Industrial Applicability

The ion-conducting material of the present invention is applicable to an electrochemical device, and is suitable for, for example, an electrolyte of a fuel cell, an electrolyte of a capacitor, a sensing member of a gas sensor, and a humidity detection member of a humidity control apparatus.

## Claims

1. An ion-conducting material, comprising, as a composition in terms of mol%, 15 to 80% of P₂O₅, 0 to 70% of SiO₂, and 5 to 35% of R₂O, which represents a total content of Li₂O, Na₂O, K₂O, Rb₂O, Cs₂O, and Ag₂O.

2. The ion-conducting material according to claim 1, wherein R₂O comprises at least two or more kinds of components among Li₂O, Na₂O, K₂O, Rb₂O, Cs₂O, and Ag₂O.

3. The ion-conducting material according to claim 1 or 2, wherein a content of P₂O₅ is 15 to 60% and a content of SiO₂ is 10 to 60%.

4. The ion-conducting material according to any one of claims 1 to 3, wherein the ion-conducting material has a molar ratio of (Na₂O+K₂O) /R₂O of 0.2 to 1.0.

5. The ion-conducting material according to any one of claims 1 to 4, wherein the ion-conducting material has a molar ratio of Na₂O/R₂O of 0.2 to 0.8.

6. The ion-conducting material according to any one of claims 1 to 5, wherein the ion-conducting material has a molar ratio of K₂O/R₂O of 0.2 to 0.8.

7. The ion-conducting material according to any one of claims 1 to 6, further comprising 0.1 mol% or more of Al₂O₃ in the composition.

8. The ion-conducting material according to any one of claims 1 to 7, wherein the ion-conducting material has an ionic conductivity log₁₀σ (S/cm) at 500°C of -5.5 or more and has a transport number of a proton at 500°C of 0.7 or more.

9. The ion-conducting material according to any one of claims 1 to 8, wherein the ion-conducting material has an areal resistance value (Ω·cm²) at 500°C of 30 or less.

10. The ion-conducting material according to any one of claims 1 to 9, wherein the ion-conducting material is an amorphous material with a crystallinity of 50% or less.

11. The ion-conducting material according to any one of claims 1 to 10, wherein the ion-conducting material has a thin-sheet shape and has a thickness of 1 to 500 µm.

12. The ion-conducting material according to any one of claims 1 to 11, wherein the ion-conducting material is used for an electrochemical device.

13. The ion-conducting material according to any one of claims 1 to 11, wherein the ion-conducting material is used for a fuel cell.

14. An electrochemical device, comprising the ion-conducting material as claimed in any one of claims 1 to 11.

15. Amethod of producing the ion-conducting material as claimed in any one of claims 1 to 11, the method comprising the steps of:
melting a raw material; and
forming the resultant molten glass into a predetermined shape.

16. The method of producing the ion-conducting material according to claim 15, wherein a method for the forming is any one of an overflow down-draw method, a slot down-draw method, and a redraw method.
